## Europäisches Patentamt

## European Patent Office

## Office européen des brevets

(11) Veröffentlichungsnummer: **0 258 518**
**B1**

(12) EUROPÄISCHE PATENTSCHRIFT

(45) Veröffentlichungstag der Patentschrift:
27.06.90

(51) Int. Cl.⁵: **B24B 23/04**, F16H 21/30

(21) Anmeldenummer: 87100796.9

(22) Anmeldetag: 21.01.87

(54) Schwingschleifer.

(30) Priorität: 04.09.86 DE 3630155

(43) Veröffentlichungstag der Anmeldung:
09.03.88 Patentblatt 88/10

(45) Bekanntmachung des Hinweises auf die Patenterteilung:
27.06.90 Patentblatt 90/26

(84) Benannte Vertragsstaaten:
CH DE GB LI NL

(56) Entgegenhaltungen:
EP-A- 0 102 107
DE-A- 2 349 805

(73) Patentinhaber: Licentia Patent-Verwaltungs-GmbH,
Theodor-Stern-Kai 1, D-6000 Frankfurt/Main 70(DE)

(72) Erfinder: Preis, Erich, Canzstrasse 45,
D-7056 Weinstadt 3(DE)

(74) Vertreter: Wolf, Otto, Dr. Ing. et al, Licentia
Patent-Verwaltungs-GmbH Theodor-Stern-Kai 1,
D-6000 Frankfurt 70(DE)

## Beschreibung

Die Erfindung betrifft einen Schwingschleifer nach dem Oberbegriff des Patentanspruchs 1.

Derartige Schwingschleifer, wie etwa der aus EP-A 0 102 107 bekannte, weisen meist kein Untersetzungsgetriebe zwischen der Ankerwelle des Antriebsmotors und der Antriebswelle der Schleifplatte auf, so daß Ankerwelle und Antriebswelle identisch sind.

Es sind jedoch auch schon Schwingschleifer der gattungsgemäßen Art bekannt geworden, bei denen die Drahzahl des Antriebsmotors mittels eines herkömmlichen Getriebes untersetzt und dementsprechend die Schwingungszahl der Schleifplatte reduziert ist. Die für diesen Zweck verwendeten Getriebe beanspruchen jedoch ein nicht unerhebliches Einbauvolumen, außerdem sind sie kostenaufwendig.

Es ist Aufgabe der Erfindung, eine Getriebekonzeption zu finden, die mit einem Geringstmaß an Einbauvolumen und Kosten eine in einem relativ weiten Bereich wählbare Untersetzung der Drehzahl der Ankerwelle des Antriebsmotors ermöglicht.

Diese Aufgabe ist erfindungsgemäß mit den kennzeichnenden Merkmalen des Patentanspruchs 1 gelöst.

Mit dieser Maßnahme ist erreicht, daß Getriebe und Exzenter eine Baueinheit bilden, die kompakt und preisgünstig ist. Weiterbildungen und zweckmäßige Ausgestaltungen der Erfindung sind in den Unteransprüchen angegeben.

Die Erfindung wird im nachstehenden anhand der Zeichnung, de ein Ausführungsbeispiel mit drei Planetenrädern schematisch veranschaulicht, erläutert.

Es zeigen:

Fig. 1 bis 3: die Anordnung und den Aufbau des asymmetrischen Getriebes bei verschiedenen Positionen der Planetenräder,

Fig. 4 : Die Umlaufbewegung des Außenrades,

Fig. 5 : eine Draufsicht auf das Planetengretriebe mit Schleifplatte,

Fig. 6 : eine Ansicht längs des Schnitts A-B durch Fig. 5

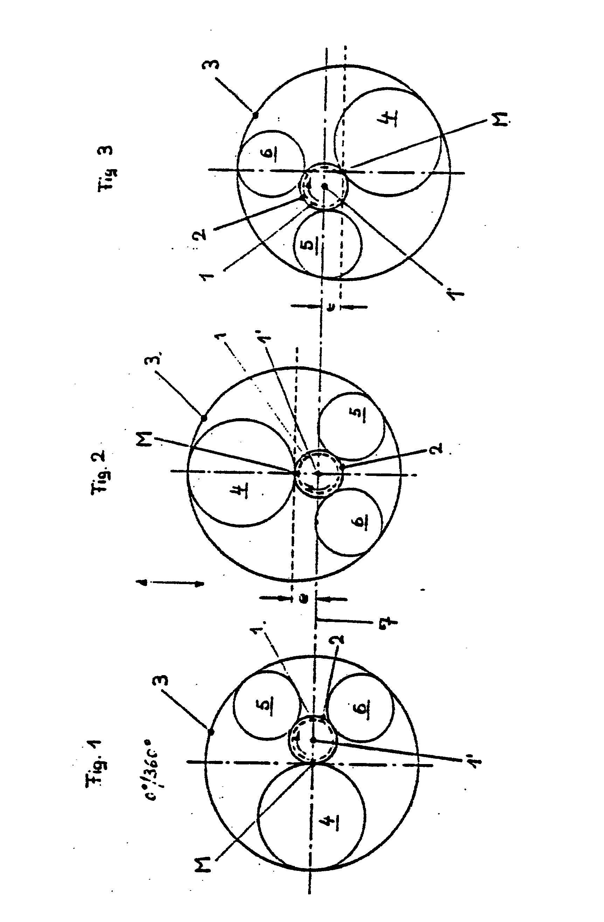

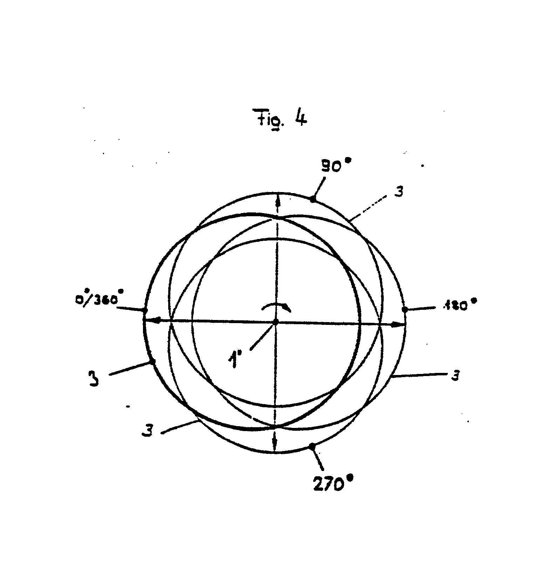

Das in den Figuren 1 bis 3 schematisch dargestellte asymmetrische Planetengetriebe enthält ein auf der Anker- bzw. der Antriebswelle 1 des nicht gezeichneten Antriebsmotors angebrachtes Sonnenrad 2, mit dem drei in die Innenverzahnung des Außenrads 3 eingreifende Planetenräder 4,5 und 6 kämmen. Von diesen drei Planetenrädern weist das Rad 4 einen größeren Durchmesser auf als die beiden anderen Räder 5 und 6. Bei Drehung des Sonnenrads 2 rollen die drei Planetenräder auf diesem und der Innenverzahnung des Außenrads 3, das gegebenenfalls in Grenzen auch elastisch verformbar sein kann, ab. Wegen der unterschiedlichen Größen der Planetenräder und der ortsunveränderlichen Antriebswelle 1 führt das Außenrad 3 eine Drehbewegung um die exzentrisch zu seinem Mittelpunkt M liegende Achse 1' der Antriebswelle aus. Infolge dieser Exzenterbewegung ergibt sich auch in Längsrichtung (siehe Doppelpfeil) bezogen auf die "Ausgangsposition" gemäß Figur 1 (Mittellinie 7) ein positiver und negativer Hub e und insgesamt gesehen eine Umlaufbewegung des Außenrads 3, wie sie im Prinzip in Fig. 4 dargestellt ist. Die Ausgangsposition des Außenrads 3 entspricht dabei dergenigen nach Fig. 1 (0°/360°).

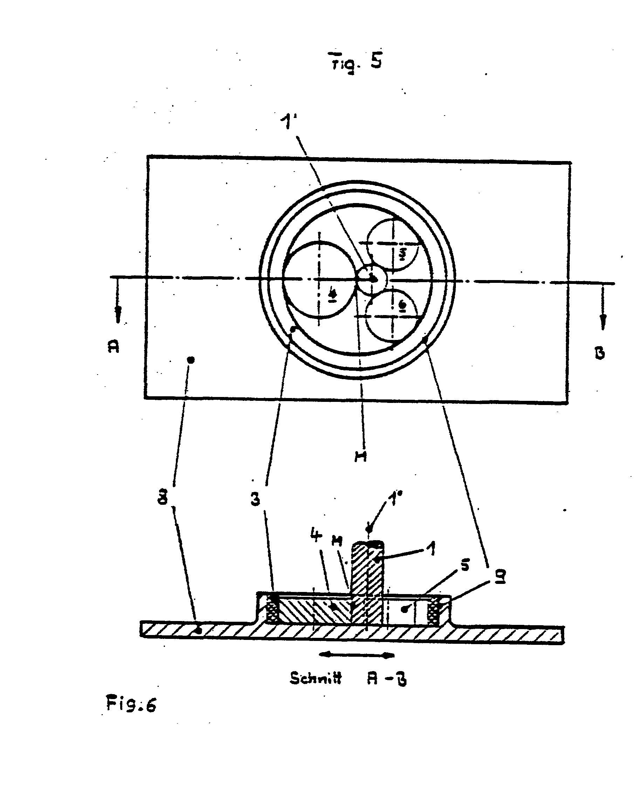

Die Bewegung des durch das Außenrad 3 verkörperten Exzenters wird, wie aus den Fig. 5 und 6 ersichtlich ist, auf die Schleifplatte 8 übertragen, die eine kreisförmige Ausnehmung 9 aufweist, in welche das mechanisch fest mit der Schleifplatte verbundene Außenrad 3 eingreift.

Die erfindungsgemäße Untersetzung der Drehzahl der Antriebswelle ermöglicht eine beträchtliche Erhöhung der Drehzahl des Antriebsmotors und damit bei gleicher Motorbaugröße auch eine Steigerung der Antriebsleistung.

Anstelle eines Planetenantriebs mit Zahnrädern gleichen Moduls können auch Reibräder vorgesehen sein, und zwar einschließlich des Sonnenrads 2. Gegebenenfalls können unabhängig davon, ob ein Planetengetriebe mit Zahnrädern oder Reibrädern benutzt wird, jeweils auch nur zwei Planetenräder mit unterschiedlichem Durchmesser vorgesehen sein.

## Patentansprüche

1) Schwingschleifer mit einer über elastische Elemente abgestützten Schleifplatte, die mittels eines unmittelbar oder mittelbar durch die Ankerwelle eines Antriebsmotors in Drehung versetzbaren Antriebsexzenters in eine Hin- und Herbewegung versetzbar ist, dadurch gekennzeichnet, daß der Antriebsexzenter durch das Außenrad (3) eines asymmetrischen Planetengetriebes mit auf der Antriebswelle (1) angeordnetem Sonnenrad (2) verkörpert ist.

2) Schwingschleifer nach Anspruch 1, dadurch gkennzeichnet, daß des Sonnenrad (2) des Planetengetriebes durch das Antriebsritzel der Ankerwelle des Antriebsmotors verkörpert ist und das Antriebsritzel mit wenigstens zwei verschiedenen Durchmessern aufweisenden und mit dem innenverzahnten Außenrad (3) kämmenden Planetenrädern im Eingriff steht, wobei sämtliche Zahnräder gleichen Modul besitzen.

3) Schwingschleifer nach den Ansprüchen 1 und 2, dadurch gekennzeichnet, daß das Planetengetriebe drei mit dem Sonnenrad (2) und dem innenverzahnten Außenrad (3) im Eingriff stehende Planetenräder umfaßt, von denen eines (4) einen größeren Durchmesser besitzt als die beiden anderen (5,6).

4) Schwingschleifer nach Anspruch 1, dadurch gekennzeichnet, daß das Sonnenrad, die Planetenräder und das Außenrad als Reibradsystem ausgebildet sind.

## Claims

1. Orbital sander with a sanding plate which is supported by way of elastic elements and settable into a reciprocating motion by means of a driving eccentric settable into rotation directly or indirectly by the armature shaft of a drive motor, characterised thereby, that the driving eccentric is embodied by the outer wheel (3) of an asymmetric planetary gear with a sun wheel (2) arranged on the drive shaft (1).

2. Orbital sander according to claim 1, characterised thereby, that the sun wheel (2) of the planetary gear is embodied by the drive pinion of the armature shaft of the drive motor and the drive pinion stands in engagement with at least two planetary wheels which display different diameters and mesh with the internally toothed outer wheel (3), wherein all toothed wheels possess the same modulus.

3. Orbital sander according to the claims 1 and 2, characterised thereby, that the planetary gear comprises three planetary wheels, which stand in engagement with the sun wheel (2) and the internally toothed outer wheel (3) and of which one (4) possesses a larger diameter than both the others (5, 6).

4. Orbital sander according to claim 1, characterised · thereby, that the sun wheel, the planetary wheels and the outer wheel are constructed as friction wheel system.

**Revendications**

1. Ponceuse orbitale comprenant une plaque à meuler supportée par des éléments élastiques, ladite plaque pouvant effectuer un mouvement de va-et-vient au moyen d'un excentrique d'entraînement pouvant être entraîné en rotation directement ou indirectement par l'arbre d'un moteur d'entraînement, caractérisée en ce que l'excentrique d'entraînement est réalisé par la roue extérieure (3) d'un engrenage planétaire asymétrique muni d'une roue satellite (2) disposée sur l'arbre de transmission (1).

2. Ponceuse selon la revendication 1, caractérisée en ce que la roue satellite (2) de l'engrenage planétaire est rectifiée par le pignon menant de l'arbre du moteur d'entraînement et en ce que le pignon menant engrène avec au moins deux roues planétaires présentant des diamètres différents et est en prise avec la roue extérieure (3) à denture intérieure, toutes les roues dentées ayant le même module.

3. Ponceuse selon les revendications 1 et 2, caractérisée en ce que l' engrenage planétaire comprend trois roues planétaires engrenant avec la roue satellite (2) et la roue extérieure (3), à denture intérieure, une roue planétaire (4) ayant un diamètre supérieur à celui des deux autres (5, 6).

4. Ponceuse selon la revendication 1, caractérisée en ce que la roue satellite, les roues planétaires et la roue extérieure sont réalisées en tant que système à friction.

Fig. 1

Fig. 2

Fig. 3

Fig. 4

Fig. 5

Schnitt    A - B

Fig. 6